Europäisches Patentamt

European Patent Office

Office européen des brevets

(19)

(11) Veröffentlichungsnummer: **0 127 106**
**B1**

(12) **EUROPÄISCHE PATENTSCHRIFT**

(45) Veröffentlichungstag der Patentschrift:
**08.11.89**

(51) Int. Cl.⁴: **G 01 N 21/77**, G 01 N 21/64,
H 05 B 33/28

(21) Anmeldenummer: **84105801.9**

(22) Anmeldetag: **21.05.84**

(54) **Sensor zur Messung von physikalischen Parametern oder Teilchenkonzentrationen.**

(30) Priorität: **28.05.83 DE 3319526**

(43) Veröffentlichungstag der Anmeldung:
**05.12.84 Patentblatt 84/49**

(45) Bekanntmachung des Hinweises auf die Patenterteilung:
**08.11.89 Patentblatt 89/45**

(84) Benannte Vertragsstaaten:
**AT CH FR GB IT LI LU NL SE**

(56) Entgegenhaltungen:
**EP-A- 0 091 046**
**DE-A- 2 508 637**
**DE-A- 3 029 469**
**GB-A- 2 052 046**
**US-A- 3 441 736**
**US-A- 3 634 714**
**US-A- 4 020 389**
**US-A- 4 035 686**

(73) Patentinhaber: **Max-Planck-Gesellschaft zur Förderung der Wissenschaften e.V., Bunsenstrasse 10,
D-3400 Göttingen (DE)**

(72) Erfinder: **Lübbers, D.W., Dr., Rheinlanddamm 201 a,
D-4600 Dortmund 1 (DE)**
Erfinder: **Opitz, Norbert, Dr., Villigsterstrasse 6,
D-5840 Schwerte 5 (DE)**

(74) Vertreter: **Hofmann, Hans Walter, Dr., Hauptstrasse 38,
D-6549 Tiefenbach (DE)**

ACTORUM AG

## Beschreibung

Die Erfindung betrifft einen Sensor zur Messung von physikalischen Parametern oder Teilchenkonzentrationen, bestehend aus einem einen optischen Indikator enthaltenden Indikatorraum und einer Lichtquelle sowie einer die von dem optischen Indikator ausgehende Lichtintensität messenden, mindestens einen Photoempfänger enthaltenden Lichtmesseinrichtung.

Anordnungen zur optischen Messung von physikalischen Parametern oder von Teilchenkonzentrationen, wie aus der DE-OS 2 508 637 bekannt, bestanden bisher – nach Baugruppen getrennt – aus einer optischen Vorrichtung für die Lichtmessung und dem jeweils verwendeten, einen optischen Indikator enthaltenden Indikatorraum. Die Gesamtvorrichtung zeichnete sich besonders durch Robustheit bei der Anwendung aus.

Um eine Reihe neuer Anwendungen für dieses Meßprinzip zu erschließen, sollen die Anordnung verkleinert und gleichzeitig die Signale verbessert werden.

Diese Verkleinerung und die Verbesserung der Messung mit der gattungsgemäßen Anordnung ist die Aufgabe der Erfindung.

Sie löst diese Aufgabe dadurch, daß die Lichtquelle ein flächiger Lumineszenzstrahler ist und daß Strahler und Photoempfänger dicht benachbart sind.

Dabei können im wesentlichen zwei Arten von Lumineszenzstrahlern zur Lichterzeugung verwendet werden. Bei Elektrolumineszenz liegen, ähnlich wie bei Leuchtdioden, in einem sogenannten «Phosphor» in mikrokristallinen Bereichen Halbleiter mit etwa 1,8 eV Bandabstand zwischen Leitungsband und Valenzband vor. Diese geben Lichtquanten ab, wenn Elektronen, die elektrisch in das Leitungsband gehoben worden waren, wieder in das Valenzband zurückfallen. Die Anregung erfolgt über Verschiebeströme bei Wechselspannungsanregung.

Bei der Elektrochemolumineszenz werden durch Anlegen des Feldes zunächst chemische Radikale gebildet. Diese rekombinieren wieder und geben dabei Lichtquanten ab. Der Vorgang kommt rasch ins Gleichgewicht.

Da beim Emissionsvorgang keine Wärme erforderlich ist oder in nennenswertem Umfang entsteht, können Strahler und Photoempfänger dicht benachbart sein. Das führt unmittelbar zu dem Vorteil, daß sehr große Raumwinkel der Strahlung durch den Photoempfänger ausgenutzt werden können, so daß sich das Signal-Rauschverhältnis wesentlich verbessern läßt.

Die Anregung der Lumineszenz erfolgt entweder durch elektrische Wechselfelder oder durch Gleichfelder. Die Ausbildung der Lichtquelle als Lichtfläche ist dann besonders vorteilhaft, wenn auch der Photoempfänger flächig verteilt ist.

Sehr kleine, flache Vorrichtungen lassen sich insbesondere dann herstellen, wenn der Indikatorraum, die Lichtfläche, optische Filter und Trennschichten lagenweise auf der Empfangsfläche des Photoempfängers aufgebracht sind.

Eine solche Vorrichtung soll im folgenden als «physikalischer Sensor» bezeichnet werden, weil eine große Anzahl von Meßaufgaben durch Wahl der jeweils passenden Indikatoren und Phosphore gelöst werden kann, wobei der Aufbau im übrigen jeweils gleich bleiben kann.

Optische Filter sind bei solchen physikalischen Sensoren dann nicht mehr erforderlich, wenn entweder, bei Fluoreszenzindikatoren, der Frequenzbereich der Lumineszenzstrahlung im Frequenzbereich der Anregungsstrahlung der fluoreszierenden Indikatormoleküle und die Fluoreszenzstrahlung der Indikatormoleküle im Empfangsbereich des Photoempfängers liegt, oder wenn, bei Absorptionsindikatoren, die Lumineszenzstrahlung im Empfangsbereich des Photoempfängers liegt.

In einer anderen Weiterentwicklung der Erfindung ist der Elektrolumineszenzphosphor im Indikatorraum angeordnet. Leuchtfläche und Indikatorraum sind in diesem Falle identisch.

Dadurch wird eine weitere Verkleinerung der Dimension des physikalischen Sensors und eine Vergrößerung seiner Genauigkeit für den Meßparameter erreicht.

Wo dies der Meßparameter zuläßt, werden zweckmäßig die Indikatoren und die Phosphore leckfrei in eine Trägermatrix eingesiegelt. Dadurch wird die Störanfälligkeit weiter verringert.

Die Störanfälligkeit kann weiter auch noch dadurch verkleinert werden, daß die Phosphore verkapselt und im Indikatorraum angeordnet sind, oder daß die Indikatoren verkapselt und mit den Phosphoren in der Leuchtfläche angeordnet sind.

In einer anderen Weiterentwicklung der Erfindung sind elektrische Leitflächen im Indikatorraum vorgesehen. Dadurch lassen sich örtlich sehr hohe Feldstärken erzeugen, insbesondere wenn die elektrischen Leitflächen Kanten oder Spitzen aufweisen. Dann können geringere Spannungen zur Erzeugung der Lumineszenz verwendet werden.

Für Anwendungen, bei denen mehrere Meßstrecken für transparente Meßobjekte vorhanden sein sollen, ist auf die Lichtfläche beiderseitig je ein Indikatorraum angeordnet und ein Meßraum zwischen dem Indikatorraum und dem Photoempfänger vorgesehen.

Sollen Referenzmessungen zur Kontrolle der Lichtintensität der Vorrichtung neben der Messung des physikalischen Parameters oder der Teilchenkonzentration einhergehen, ist ein Referenzindikator vor dem, hinter dem, oder im Indikatorraum angeordnet.

Wenn mehrere Messungen simultan nebeneinander, vor allem im gleichen Meßraum vorgenommen werden sollen, sind mehrere Phosphore verschiedener Emissionswellenlänge und auf die Emissionswellenlänge abgestimmte Indikatoren im Indikatorraum vorgesehen.

Es können dazu auch einstückige Arrays in linearer oder flächiger Form verwendet werden, die durch Einzelsensoren oder durch durch Felderung der Empfängerflächen, der Indikatorflächen und der Leuchtflächen gebildet werden.

In der Zeichnung, anhand derer die Erfindung weiter erläutert wird, zeigt

Fig. 1: Einen Sensor nach der Erfindung.

Fig. 2: Einen Ausschnitt aus Fig. 1.

Fig. 3: Eine zweite Ausführung der Erfindung.

Fig. 4: Eine dritte Ausführung der Erfindung.

Fig. 5: Eine Meßanordnung.

Fig. 6: Eine weitere Meßanordnung.

Fig. 7: Einen Sensorarray und

Fig. 8: einen Sensorzuschnitt.

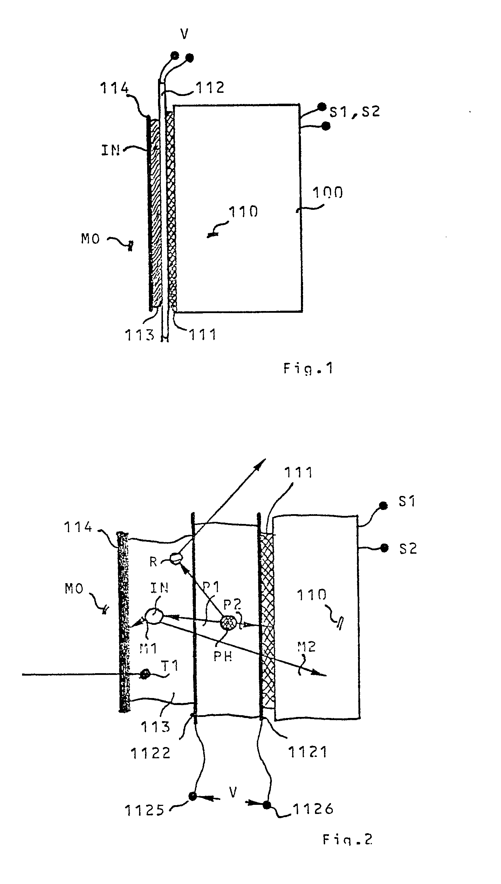

In Fig. 1 ist ein Photoempfänger 110 mit einer Filterschicht 111 versehen. Eine Lichtfläche 112, die auf der Filterschicht 111 angeordnet ist, bestrahlt eine einen optischen Indikator IN enthaltenden Indikatorraum 113, der mit einer Schicht 114 zur optischen Entkopplung versehen ist, die mit dem Meßobjekt MO in Wirkverbindung steht.

Das Meßobjekt MO sei beispielsweise eine Wasserprobe, deren Sauerstoffgehalt durch Fluoreszenzlöschung des Fluoreszenzindikators IN gemessen werden soll, wobei das Prüflicht durch die Lichtfläche 112 erzeugt und durch den Photoempfänger 110 gemessen wird.

Die dabei auftretenden Lichtwege sind aus Fig. 2 zu ersehen. Der Phosphor PH sei ein Chemolumineszenzphosphor, wie beispielsweie Rubren (5,6,11,12-Tetraphenyltetracen), das in wasserfreiem DME (1,2-Dimethoxyethan) gelöst ist. Nach Anlegen einer elektrischen Spannung V von etwa 2 Volt an die Klemmen 1125, 1126 der transparenten Elektroden 1121 und 1122, die sich im Abstand von etwa 50 Mikrometer gegenüberstehen, entstehen Lichtquanten P1, P2. Das Prüflicht P2 wird durch das Filter 111 eliminiert, das Prüflicht P1 regt das Indikatormolekül IN an, das das Meßlicht M1, M2 abgibt. Das Meßlicht M1 wird, zur Vermeidung von Störungen, in der Entkopplungsschicht 114 eliminiert, während das Meßlicht M2 das dafür offene Filter 111 durchläuft und den Photoempfänger 110 beaufschlagt. Wie hoch das an den Signalklemmen S1, S2 liegende Signal wird, hängt von der Konzentration der zu messenden Teilchen T1, im Beispielsfalle Sauerstoff, ab, da die Teilchen T1 die Intensität des Fluoreszenzlichtes durch Löschen verändern. Je mehr Teilchen T1 vorhanden sind, desto geringer wird das Signal. Die Teilchen T1 treten durch Diffusion in den Indikatorraum 113 ein. Die Anordnung nach Fig. 2 ist danach für Konzentrationsmessungen an Sauerstoff geeignet.

Um von Intensitätsänderungen unabhängig zu sein, können weiterhin Referenzindikatoren R vorgesehen sein. Die Referenzindikatoren dürfen nicht durch den zu messenden Parameter geändert werden und müssen gleichzeitig gemessen und mit dem Meßsignal in bekannter Weise, beispielsweise durch Quotientenbildung von Referenz- und Meßsignal, verarbeitet werden.

Andere Teilchen, wie Ionen oder Gase, können mit anderen, darauf abgestimmten Indikatoren und Membranen gemessen werden. Ebenso können Druck, Temperatur oder andere physikalische Parameter mit entsprechenden Indikatoren gemessen werden.

Beispielsweise wird zur Messung des Partialdruckes von CO2 oder des pH-Wertes der Fluoreszenzindikator HPTS (hydroxy-pyrentrisulfonsäure-trinatrium-salz) mit einem Phosphor aus Cedotiertem SrS kombiniert. Oder es kann beispielsweise HPTS oder Perylen als Fluoreszenzindikator für Sauerstoff mit Tm-dotiertem ZnS als Phosphor kombiniert werden.

Die Anordnung 100 nach Fig. 1 stellt danach einen kompakten «physikalischen Sensor» dar, der aufgrund der einfachen Variierbarkeit von Indikatoren und Phosphoren für eine große Zahl verschiedener physikalischer Parameter oder von Teilchenkonzentrationen verwendet werden kann.

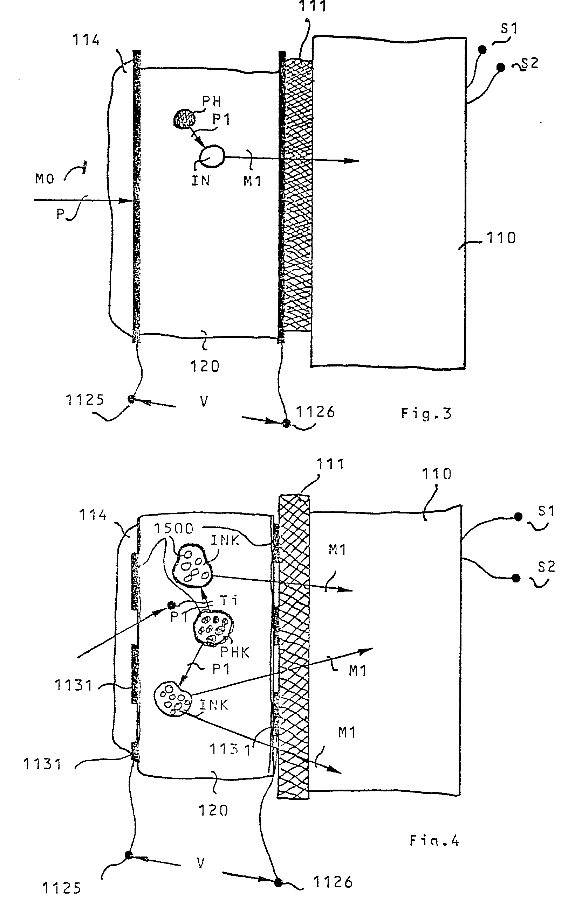

Werden gemäß Fig. 3 die Phosphormoleküle und die Indikatormoleküle in eine gemeinsame Matrix 120, etwa eine Siliconfolie eingebettet, dann ist die Meßgenauigkeit für den physikalischen Parameter P weiter erhöht, weil das Prüflicht P1 jetzt in unmittelbarer Nähe der Indikatormoleküle IN erzeugt wird, und, im Falle einer Konzentrationsmessung von Teilchen, die Konzentration der zu messenden Teilchen in der Matrix durch Wahl einer Substanz mit hohem Löslichkeitskoeffizienten erhöht sein kann.

Darüber hinaus ist die Vorrichtung an sich vereinfacht, weil Strahler und Indikatorraum zusammenfallen.

Insbesondere, wenn Absorptionsindikatoren IN verwendet werden, wird das Vorzeichen des Lichtsignals umgekehrt. Wenn nämlich die Wirkung des Meßparameters erhöht wird, wird das Meßlicht geringer. Das Meßlicht verhält sich also wie vom Meßparameter oder von einer Teilchenkonzentration beeinflußtes Fluoreszenzlicht.

Die Anregungsspannung wird zweckmäßig über transparente Elektroden aus beispielsweise In2.03:Sn, die pyrolytisch, durch Sputtern oder Bedampfen aufgebracht werden können, zugeleitet.

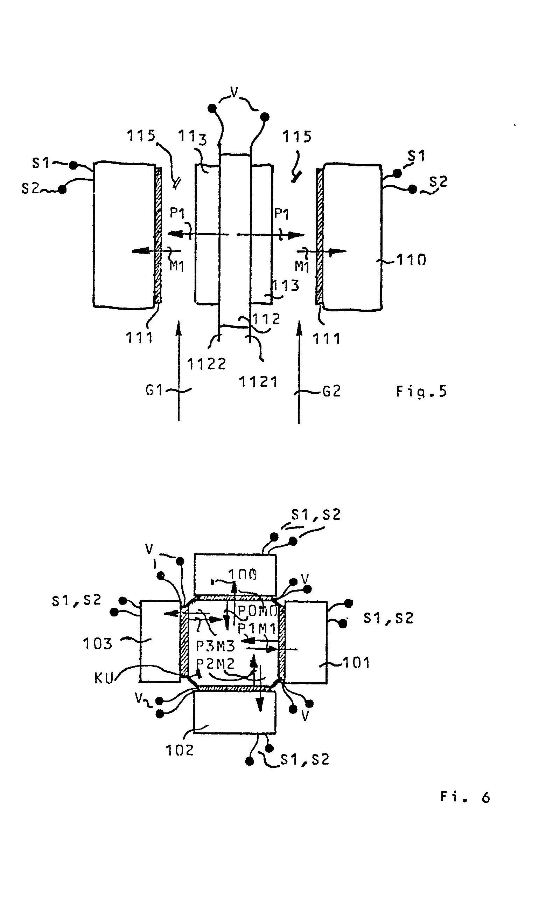

Die Diffusion von Teilchen kann durch solche Elektroden behindert sein. Um für Teilchenmessungen einen ungehinderten Zugang zum Indikatorraum zu ermöglichen, können gemäß Fig. 4 anstelle von geschlossenen Elektroden Elektrodenmuster als Anregungselektroden vorgesehen sein. Die Wirkung der Kanten solcher Leitelektroden (1131) oder von eigens dazu vorgesehenen Spitzen erhöht außerdem lokal die Feldstärke, so daß geringere Anregungsspannungen für die Lumineszenz erforderlich sind.

Besonders vorteilhaft ist es, wenn die Trägermatrix hinsichtlich der Diffusion der zu messenden Partikel optimiert ist, wenn sie also beispielsweise eine hohe O2-Permeabilität für den Fall aufweist, daß der Sauerstoffpartialdruck gemessen werden soll oder wenn zur optischen Anpassung der Indikatorraum als einen Indikator aufweisende Matrix ausgebildet ist, und der die Matrix bildende Stoff so gewählt ist, daß sich für die zu messenden Teilchen die Quadrate der Löslichkeitskoeffizienten des Meßobjektes und der den Indikatorrraum bildenden Stoffe etwas umgekehrt verhalten wie deren Diffusionskoeffizienten. Durch eine solche Anordnung wird die Grenzschicht zwischen Matrix und Meßobjekt optisch neutralisiert.

Bei der Messung von diffundierenden Partikeln ist es von Vorteil, wenn die Matrix dünn, also in der Größenordnung von Mikrometern oder weniger ausgebildet ist, weil dadurch die Einstellzeit des physikalischen Sensors verringert und damit sein Frequenzverhalten verbessert wird. Beispielsweise kann die Matrix aus einer äußeren Aufschichtung monomolekularer lipophiler Indikatoren bestehen.

Falls sich bei gleichzeitiger Anwesenheit von Phosphoren Verträglichkeitsprobleme zwischen den Indikatoren, den Phosphoren und gegebenenfalls den zu messenden Teilchen ergeben, können die Phosphoren und/oder die Indikatoren in Mikrokapseln INK, PHK, die Indikatoren auch in die noch kleineren Nanokapseln eingeschlossen werden, wie dies Fig. 4 schematisch zeigt. Hierbei können die Indikatoren in den Leuchtflächen oder die Phosphore in den Indikatorräumen angeordnet sein. Indikatoren, Phosphore und Matrix können mit Membranen 1500 umhüllt sein. Soweit die Oberflächen in den Außenraum weisen, können die Membranen zur Hydrophobierung der Oberfläche verwendet sein und beispielsweise aus lipophilen Stoffen bestehen.

Durch solche Verkapselungen entsteht auch eine chemische Entkopplung des Sensors vom Meßraum, weil insbesondere bei dünnen Matrices, in die die Indikatoren und Phosphore unmittelbar eingelagert sind, und bei denen die an der Oberfläche liegenden Phosphore oder Indikatoren auf die Dauer ausgewaschen werden können, durch die Kapselmembranen ein zusätzlicher Schutz bewirkt wird.

Für den Fall, daß der Phosphor selbst mit Leuchtdichteänderung auf den Meßparameter oder die Teilchenkonzentration reagiert, kann der Indikator entfallen.

Die Meßanordnung nach Fig. 5 ist zur Messung von transparenten Gasen und Flüssigkeiten geeignet. Hier ist die Lichtfläche 112 von beiden Seiten mit Indikatorräumen 113 versehen, also zweifach ausgenutzt. Das transparente Meßobjekt G1,G2 durchströmt die Meßkammern 115, das Prüflicht P1 durchstrahlt die Indikatorräume, wird dort durch die Indikatoren verändert und das resultierende Meßlicht M1 durch die Photoempfänger 110 gemessen. Die Wirkung des Meßobjektes auf den Indikator in den Indikatorräumen 113 ergibt das Meßsignal.

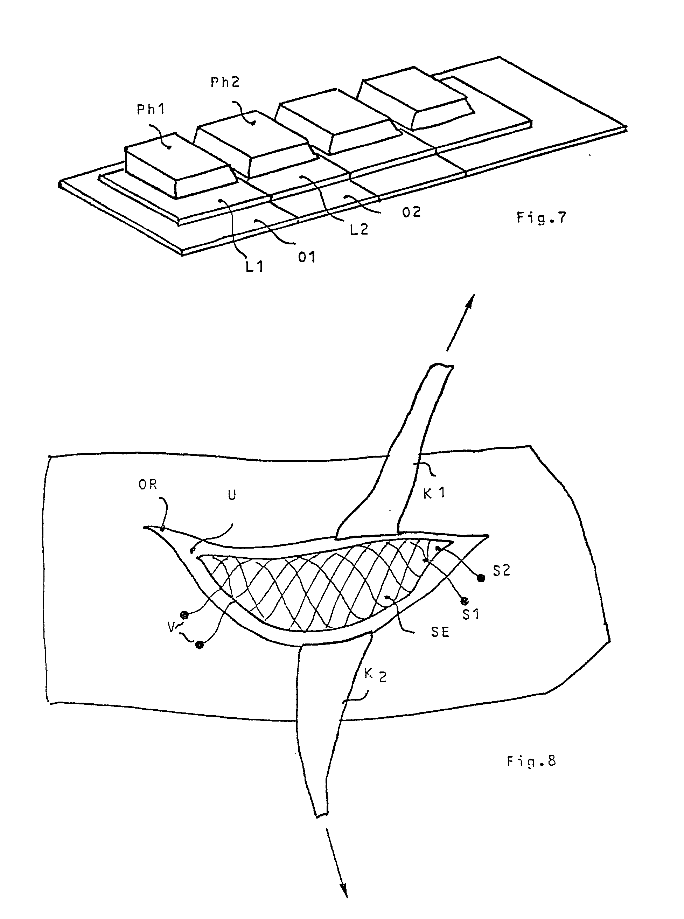

In Fig. 6 ist eine Anordnung zur Messung mehrerer Parameter des gleichen Meßobjektes dargestellt. Auch hier kann die aus den Sensoren 100, 101, 102, 103 gebildete Küvette KU, die im Querschnitt gezeigt ist, vom Meßobjekt durchströmt und vom Prüflicht P0...P3 durchstrahlt sein. Das Meßlicht M0...M3 wird durch die Photoempfänger 100..103 gemessen.

Als weitere Variante ist in Fig. 7 ein gefelderter Sensor dargestellt. Mit einem solchen Sensor lassen sich beispielsweise «Spektren» aus mehreren Meßparametern gewinnen. In der Schnittzeichnung sind Photowiderstände Ph1, Ph2,... auf Feldern L1,L2,... von Leuchtflächen mit Leuchtphosphoren und Feldern O1,O2,... von Indikatorräumen angeordnet. Ein solches Array kann linear oder flächig angeordnet sein.

Mit Vorrichtungen dieser Art können auch Fließbewegungen von Teilchen, soweit sie auf Konzentrationsunterschieden beruhen, oder von Parametern, beispielsweise der Temperatur verfolgt werden.

In Fig. 8 ist ein physikalischer Sensor dargestellt, dessen Photoempfänger eine Photoschicht ist. Dadurch läßt sich der physikalische Sensor mit einfachen Hilfsmitteln in seiner geometrischen Form SE auf ein Untersuchungsfeld U anpassen. Im gezeichneten Beispiel ist der Sensor SE auf eine Organöffnung OR aufgelegt, wobei die Organhaut mit zwei Klemmen K1, K2 offen gehalten ist.

Es ist weiterhin möglich, Sensoren mit weiteren Hilfsmitteln, beispielsweise zur Thermostatisierung, zur Abschirmung und dergleichen, oder mit weteren Meßmitteln anderer Art zu kombinieren.

## Patentansprüche

1. Physikalischer Sensor zur Messung von physikalischen Parametern oder Teilchenkonzentrationen, bestehend aus einem einen optischen Indikator (IN) enthaltenden Indikatorraum (113) und einer Lichtquelle (112) sowie einer die von dem optischen Indikator (IN) ausgehende Lichtintensität messenden, mindestens einen Photoempfänger (110) enthaltenden Lichtmeßeinrichtung, dadurch gekennzeichnet, daß die Lichtquelle (112) ein flächiger Lumineszenzstrahler ist und daß Strahler (112) und Photoempfänger (110) dicht benachbart sind.

2. Anordnung nach Anspruch 1, dadurch gekennzeichnet, daß in der Lichtquelle (112) Elektrolumineszenz vorliegt.

3. Anordnung nach Anspruch 1, dadurch gekennzeichnet, daß in der Lichtquelle (112) Elektrochemolumineszenz vorliegt.

4. Anordnung nach einem der Ansprüche 1 bis 3, dadurch gekennzeichnet, daß der Photoempfänger (110) flächig verteilt ist.

5. Anordnung nach Anspruch 4, dadurch gekennzeichnet, daß der Indikatorraum (113), die Lichtfläche (112), optische Filter (111) und Trennschichten (1130) lagenweise auf der Empfangsfläche des Photoempfängers (110) aufgebracht sind.

6. Anordnung nach einem der Ansprüche 1 bis 5, dadurch gekennzeichnet, daß der Absorptionsbereich des Indikators und die Fluoreszenzstrahlung im Empfangsbereich des Photoempfängers liegen.

7. Anordnung nach dem Anspruch 2, dadurch gekennzeichnet, daß der Lumineszenzphosphor (PH) im Indikatorraum (113) oder der Indikator (IN) in der Leuchtfläche (120) angeordnet ist.

8. Anordnung nach Anspruch 7, dadurch gekennzeichnet, daß die Indikatoren (IN) und die Phosphore (PH) leckfrei in eine Matrix eingesiegelt sind.

9. Anordnung nach Anspruch 7, dadurch gekennzeichnet, daß die Phosphore (PH) verkapselt (PHK) und im Indikatorraum (113) angeordnet sind.

10. Anordnung nach Anspruch 7, dadurch gekennzeichnet, daß die Indikatoren (I) verkapselt (PHK) und in der Leuchtfläche angeordnet sind.

11. Anordnung nach einem der Ansprüche 6 bis 10, dadurch gekennzeichnet, daß elektrische Leitflächen (1131) am Indikatorraum (113) vorgesehen sind.

12. Anordnung nach Anspruch 11, dadurch gekennzeichnet, daß die elektrischen Leitflächen (1131) Spitzen aufweisen.

13. Anordnung nach Anspruch 11, dadurch gekennzeichnet, daß die elektrischen Leitflächen (1131) Kanten aufweisen.

14. Anordnung nach Anspruch 1, dadurch gekennzeichnet, daß die Lichtfläche (112) beidseitig mit je einem Indikatorraum (113) versehen ist und je ein Meßraum (115) zwischen dem Indikatorraum (113) und dem jeweiligen Photoempfänger (110) vorgesehen ist.

15. Anordnung nach einem der Ansprüche 1 bis 4, dadurch gekennzeichnet, daß ein Referenzindikator (R) vorgesehen ist.

16. Anordnung nach Anspruch 7, dadurch gekennzeichnet, daß mehrere Phosphore (PH) verschiedener Emissionswellenlänge und darauf abgestimmte Indikatoren (IN) im Indikatorraum (113) vorgesehen sind.

17. Anordnung nach einem der Ansprüche 5 bis 16, dadurch gekennzeichnet, daß mehrere Sensoren (100, 101, 102, 103) zur gleichzeitigen Messung mehrerer Parameter des gleichen Meßobjektes vorgesehen sind.

18. Anordnung nach einem der Ansprüche 1 bis 17, dadurch gekennzeichnet, daß der Photoempfänger (110) ein Fotoschichtwiderstand ist.

19. Anordnung nach einem der Ansprüche 1 bis 18, dadurch gekennzeichnet, daß die Meßflächen zuschneidbar sind.

20. Anordnung nach Anspruch 1, dadurch gekennzeichnet, daß ein Phosphor (PH) verwendet ist, dessen Leuchtintensität von dem zu messenden Parameter abhängt.

21. Anordnung nach einem der Ansprüche 1 bis 20, dadurch gekennzeichnet, daß zur chemischen Entkopplung von Meßraum und Indikatorraum die Indikatoren (IN), die Phosphore (PH) und die Leuchtfläche (120) mit Membranen (1500) umhüllt sind.

22. Anordnung nach einem der Ansprüche 1 bis 21, dadurch gekennzeichnet, daß der Indikator (IN) ein Absorptionsindikator ist.

23. Anordnung nach Anspruch 1, dadurch gekennzeichnet, daß mehrere Sensoren (Ph1-L1-O1,...) ein einstückiges Array bilden.

24. Anordnung nach einem der Ansprüche 1 bis 23, dadurch gekennzeichnet, daß nach außen weisende Flächen des Indikatorraumes hydrophob ausgebildet sind.

25. Anordnung nach einem der Ansprüche 1 bis 24, dadurch gekennzeichnet, daß der Indikatorraum als einen Indikator aufweisende Matrix ausgebildet ist, und daß der die Matrix bildende Stoff so gewählt ist, daß sich für die zu messenden Teilchen die Quadrate der Löslichkeitskoeffizienten des Meßobjektes und der den Indikatorrraum bildenden Stoffe etwa umgekehrt verhalten wie deren Diffusionskoeffizienten.

## Claims

1. A physical sensor for the measurement of physical parameters or particle concentrations consisting of an indicator chamber (113) containing an optical indicator (IN) and a light source (112) as well as a light measuring device for measuring the light intensity emitted by the optical indicator (IN) and containing at least one photosensitive cell (110), characterised in that the light source (112) is a two-dimensional luminescence emitter, and that the emitter (112) and the photosensitive cell (110) are closely adjacent.

2. An arrangement according to claim 1, characterised in that electroluminescence is present in the light source (112).

3. An arrangement according to claim 1, characterised in that electro-chemiluminescence is present in the light source (112).

4. An arrangement according to any one of claims 1 to 4, characterised in that the photosensitive cell (110) is divided two dimensionally.

5. An arrangement according to claim 4, characterised in that the indicator chamber (113), the light surface (112), the optical filter (111) and dividing layers (1130) are disposed in layers on the receiving surface of the photosensitive cell (110).

6. An arrangement according to any one of claims 1 to 5, characterised in that the absorption area of the indicator and the fluorescence emission lie in the receiving area of the photosensitive cell.

7. An arrangement according to claim 2, characterised in that the luminescence phosphor (PH) is arranged in the indicator chamber (113) or the indicator (IN) is arranged on the luminous surface (120).

8. An arrangement according to claim 7, characterised in that the indicators (IN) and the phosphors (PH) are sealed into a matrix in a leak-free manner.

9. An arrangement according to claim 7, characterised in that the phosphors (PH) are encapsulated (PHK) and arranged in the indicator chamber (113).

10. An arrangement according to claim 7, characterised in that the indicators (I) are encapsulated (PHK) and arranged on the luminous surface.

11. An arrangement according to any one of claims 6 to 10, characterised in that electrically conductive surfaces (1131) are provided in the indicator chamber (113).

12. An arrangement according to claim 11, characterised in that the electrically conductive surfaces (1131) have peaks.

13. An arrangement according to claim 11, characterised in that the electrically conductive surfaces (1131) have edges.

14. An arrangement according to claim 1, characterised in that the light surface (112) is provided on both sides with a respective indicator chamber (113) and a respective measuring chamber (115) is provided between the indicator chamber (113) and the respective photosensitive cell (110).

15. An arrangement according to any one of claims 1 to 14, characterised in that a reference indicator (R) is provided.

16. An arrangement according to claim 7, characterised in that several phosphors (PH) of different emission wavelengths and matched indicators (IN) are provided in the indicator chamber (113).

17. An arrangement according to any one of claims 5 to 16, characterised in that several sensors (100, 101, 102, 103) are provided for the simultaneous measuring of several parameters of the same object being measured.

18. An arrangement according to any one of claims 1 to 17, characterised in that the photosensitive cell (110) is a photoelectric resistance.

19. An arrangement according to any one of claims 1 to 8, characterised in that the measuring surfaces can be tailored.

20. An arrangement according to claim 1, characterised in that a phosphor (PH) is used whose luminous intensity depends on the parameter to be measured.

21. An arrangement according to any one of claims 1 to 20, characterised in that for chemical decoupling from the measuring chamber and indicator chamber the indicators (IN), the phosphors (PH) and the luminous surfaces (120) are covered with membranes (1500).

22. An arrangement according to any one of claims 1 to 21, characterised in that the indicator (IN) is an absorption indicator.

23. An arrangement according to claim 1, characterised in that several sensors (Ph1-L1-O1,...) form a one-part array.

24. An arrangement according to any one of claims 1 to 23, characterised in that the outwardly facing surfaces of the indicator chamber are hydrophobic.

25. An arrangement according to any one of claims 1 to 24, characterised in that the indicator chamber is formed as a matrix having an indicator, and that the material from which the matrix is made is chosen such that, for the particles to be measured, the square of the solubility coefficients of the object being measured and of the material forming the indicator chamber are in inverse ratio to their diffusion coefficients.

## Revendications

1. Détecteur physique pour la mesure de paramètres physiques ou de concentrations de particules, comprenant un espace indicateur (113) contenant un indicateur optique (IN), une source lumineuse (112) ainsi qu'un dispositif de mesure de lumière contenant au moins un photo-récepteur (110) et mesurant l'intensité de la lumière partant de l'indicateur optique (IN), caractérisé par le fait que la source lumineuse (112) est constituée par un émetteur de lumière par luminescence bidimensionnel et que l'émetteur (112) et le photorécepteur (110) sont étroitement voisins.

2. Agencement suivant la revendication 1, caractérisé par le fait que la source lumineuse (112) fonctionne par électroluminescence.

3. Agencement suivant la revendication 1, caractérisé par le fait que la source lumineuse (112) fonctionne par électrochimioluminescence.

4. Agencement suivant l'une des revendications 1 à 4, caractérisé par le fait que le photo-récepteur (110) est réparti de façon bidimensionelle.

5. Agencement suivant la revendication 4, caractérisé par le fait que l'espace indicateur (113), la surface lumineuse (112), des filtres optiques (111) et des couches de séparation (1130) sont rapportés par couches sur la surface de réception du photo-récepteur (110).

6. Agencement suivant l'une des revendications 1 à 5, caractérisé par le fait que la plage d'absorption de l'indicateur et le rayonnement de fluorescence se trouvent dans la plage de réception du photo-récepteur.

7. Agencement suivant la revendication 2, caractérisé par le fait que phosphor luminescent (PH) est disposé dans l'espace indicateur (120) ou l'indicateur (IN) est disposé dans la surface lumineuse (120).

8. Agencement suivant la revendication 7, caractérisé par le fait que les indicateurs (IN) et les phosphors (PH) sont scellés sans lacunes dans une matrice.

9. Agencement suivant la revendication 7, caractérisé par le fait que les phosphors (PH) sont encapsulés (PHK) et disposés dans l'espace indicateur (113).

10. Agencement suivant la revendication 7, caractérisé par le fait que les indicateurs (I) sont encapsulés (PHK) et disposés dans la surface lumineuse.

11. Agencement suivant l'une des revendications 1 à 10, caractérisé par le fait que des surfaces conductrices électriques (1131) sont prévues sur l'espace indicateur (113).

12. Agencement suivant la revendication 11, caractérisé par le fait que les surfaces conductrices électriques (1131) présentent des pointes.

13. Agencement suivant la revendication 11, caractérisé par le fait que les surfaces conductrices électriques (1131) présentent des arêtes.

14. Agencement suivant la revendication 1, caractérisé par le fait que la surface lumineuse (112) est munie des deux côtés d'un espace indicateur (113) et qu'un espace de mesure (115) est prévue entre chaque espace indicateur (113) et le photo-récepteur correspondant (110).

15. Agencement suivant l'une des revendications 1 à 14, caractérisé par le fait qu'il est prévu un indicateur de référence (R).

16. Agencement suivant la revendication 7, caractérisé par le fait que plusieurs phosphores (PH) ayant des longueurs d'onde d'émission différentes et des indicateurs (IN) qui s'y trouvent accordés sont prévus dans l'espace indicateur (113).

17. Agencement suivant l'une des revendications 5 à 16, caractérisé par le fait que plusieurs détecteurs (100, 101, 102, 103) sont prévus pour la mesure simultanée de plusieurs paramètres du même objet de mesure.

18. Agencement suivant l'une des revendications 1 à 17, caractérisé par le fait que le photo-récepteur (110) est une photo-résistance en forme de couche.

19. Agencement suivant l'une des revendications 1 à 18, caractérisé par le fait que les surfaces de mesure peuvent être coupées à dimensions.

20. Agencement suivant la revendication 1, caractérisé par le fait qu'on utilise un phosphore (PH) dont l'intensité lumineuse dépend du paramètre à mesurer.

21. Agencement suivant l'une des revendications 1 à 20, caractérisé par le fait qu'en vue du découplage chimique de l'espace de mesure et de l'espace indicateur, les indicateurs (IN), les phosphores (PH) et la surface lumineuse (120) sont entourés de membranes (1500).

22. Agencement suivant l'une des revendications 1 à 21, caractérisé par le fait que l'indicateur (IN) est un indicateur à absorption.

23. Agencement suivant la revendication 1, caractérisé par le fait que plusieurs détecteurs (Ph1-L1-O1,...) constituent un arrangement d'une seule pièce.

24. Agencement suivant l'une des revendications 1 à 23, caractérisé par le fait que des surfaces de l'espace indicateur orientées vers l'extérieur sont réalisées de façon hydrophobe.

25. Agencement suivant l'une des revendications 1 à 24, caractérisé par le fait que l'espace indicateur est réalisé sous la forme d'une matrice présentant un indicateur, et que la substance formant la matrice est choisie de manière que pour les particules à mesurer, les carrés des coefficients de solubilité de l'objet de mesure et des substances constituant l'espace indicateur se comportent à peu près à l'inverse de leurs coefficients de diffusion.

Fig.1

Fig.2

Fig.3

Fig.4

Fig.5

Fi. 6

Fig.7

Fig.8